# EUROPEAN PATENT APPLICATION

(11) **EP 4 130 544 A1**
(43) Date of publication of application: **08.02.2023**
(21) Application number: 21779850.3
(22) Date of filing: 26.03.2021
(51) Int. Cl.: F17C 11/00, F17C 13/00, C01B 3/26

(54) **ACCOMMODATION BODY AND TRANSPORTATION METHOD**

(30) Priority: 30.03.2020 JP 2020060412
(71) Applicant: ENEOS Corporation, Chiyoda-ku Tokyo 100-8162 (JP)
(72) Inventor: SEIKE Tadashi, Tokyo 100-8162 (JP); IKI Hideshi, Tokyo 100-8162 (JP); MAEDA Seiji, Tokyo 100-8162 (JP)
(74) Representative: Grünecker Patent- und Rechtsanwälte PartG mbB
(86) International application number: PCT/JP2021/012910
(87) International publication number: WO 2021/200672

(57) **Abstract**

Provided is an accommodation body that accommodates a raw material including a hydride from which a hydrogen-containing gas is capable of being obtained by subjecting the raw material to a dehydrogenation reaction. The raw material and a dehydrogenation product produced in combination with the hydrogen-containing gas by the dehydrogenation reaction are capable of being loaded together in an internal space.

## Description

### Technical Field

The present disclosure relates to an accommodation body and a transportation method.

### Background Art

In the related art, as a system that uses a raw material including a hydride from which a hydrogen-containing gas can be obtained by subjecting the raw material to a dehydrogenation reaction, for example, a system disclosed in Patent Literature 1 is known. The hydrogen supply system disclosed in Patent Literature 1 includes a tank that store a hydride of aromatic hydrocarbon as a raw material, a dehydrogenation reaction unit that subjects the raw material supplied from the tank to a dehydrogenation reaction to obtain hydrogen, a gas-liquid separation unit for gas-liquid separation of the hydrogen obtained in the dehydrogenation reaction unit, and a hydrogen purification unit that purifies the gas-liquid separated hydrogen.

### Citation List

### Patent Literature

Patent Literature 1: Japanese Unexamined Patent Publication No. 2006-232607

### Summary of Invention

### Technical Problem

In a dehydrogenation base provided with the above-described system, a raw material that is transported by a tank lorry or the like is used. That is, a moving body such as the tank lorry accommodates the raw material in the accommodation body at a raw material production base where the raw material is produced, and transports the raw material to a dehydrogenation base. Here, in a case of supplying a raw material from one raw material production base to a plurality of the dehydrogenation bases, the tank lorry goes around the plurality of dehydrogenation bases to distribute the raw material. When the accommodation body becomes empty, the tank lorry returns to the raw material production base, and goes around after accommodating the raw material in the accommodation body again. On the other hand, each of the dehydrogenation bases is provided with a tank that stores a dehydrogenation product. Accordingly, a tank lorry dedicated for recovery departs the raw material production base in a state in which the accommodation body is empty. The tank lorry dedicated for recovery recovers goes around the plurality of dehydrogenation bases to recover the dehydrogenation product, and returns the dehydrogenation product to the raw material production base. However, in this transportation method, there is a problem that a transportation frequency of the moving body such as the tank lorry becomes high, and as a result, the transportation cost increases, and finally, the cost of hydrogen increases.

The present disclosure has been made to solve the problem, and an object thereof is to provide an accommodation body and a transportation method capable of reducing a transportation frequency of a moving body that transports a raw material and a dehydrogenation product.

### Solution to Problem

According to an aspect of the present disclosure, there is provided an accommodation body that accommodates a raw material including a hydride from which a hydrogen-containing gas is capable of being obtained by subjecting the raw material to a dehydrogenation reaction. The raw material and a dehydrogenation product produced in combination with the hydrogen-containing gas by the dehydrogenation reaction are capable of being loaded together in an internal space.

Here, in a case where a moving body transports a predetermined raw material in a state of being accommodated in the accommodation body, typically, the raw material and another material are not accommodated in one accommodation body in combination in order to avoid contamination. That is, typically, with respect to the raw material, an accommodation body dedicated from the raw material is prepared, and with respect to the other material, an accommodation body dedicated for the other material is prepared for transportation. However, the present inventors have made a thorough investigation, and as a result, they obtained the following finding. Specifically, the present inventors found that in a case of transporting a raw material including a hydride from which a hydrogen-containing gas can be obtained by subjecting the raw material to a dehydrogenation reaction, even when accommodating a dehydrogenation product in the accommodation body that accommodates the raw material in combination, a problem does not occur. Accordingly, in the accommodation body according to the present disclosure, the raw material and the dehydrogenation product can be load together in an inner space. For example, in a case where a moving body has supplied a part of a raw material inside the accommodation body at an arbitrary dehydrogenation base, an empty space occurs in an inner space of the accommodation body by a space corresponding to the supply. The accommodation body can accommodate a dehydrogenation product stored at the dehydrogenation base in the empty inner space. In this case, with respect to a plurality of the dehydrogenation bases, the moving body can also recover the dehydrogenation product while distributing the raw material. Accordingly, it is not necessary to additionally prepare a moving body dedicated for the dehydrogenation product in addition to the moving body dedicated for the raw material. According to this, it is possible to reduce a transportation frequency of the moving body that transports the raw material and the dehydrogenation product.

The inner space may be partitioned into a plurality of accommodation chambers by a partition member. According to this, it is possible to easily form the plurality of accommodation chambers in the inner space of the accommodation body.

According to another aspect of the present disclosure, there is provided a transportation method of transporting a raw material by using the above-described accommodation body. The transportation method includes: a process of accommodating the raw material in the accommodation body at a raw material production base where the raw material is produced; a process of distributing the raw material inside the accommodation body at a plurality of dehydrogenation bases where the dehydrogenation reaction is performed by using the raw material; and a process of accommodating the dehydrogenation product in a space formed due to distribution of the raw material at the plurality of dehydrogenation bases.

According to the transportation method, it is possible to obtain the same operation and effect as in the above-described accommodation body.

### Advantageous Effects of Invention

According to the present disclosure, it is possible to provide an accommodation body and a transportation method capable of reducing a transportation frequency of a moving body that transports a raw material and a dehydrogenation product.

### Brief Description of Drawings

FIG. 1 is a schematic view of a transportation system using an accommodation body according to an embodiment of the present disclosure.
FIG. 2 is a block diagram illustrating a configuration of a hydrogen supply system provided in each dehydrogenation base.
FIG. 3(a) is a side view illustrating the accommodation body mounted on a moving body, and FIG. 3(b) is a conceptual diagram illustrating a usage example of the accommodation body.
FIG. 4 is a conceptual diagram illustrating an example of a transportation method.
FIG. 5 is a conceptual diagram illustrating a transportation method according to a modification example.
FIG. 6 is a block diagram schematically illustrating a flow of energy or a raw material in the transportation system.

### Description of Embodiments

Hereinafter, an appropriate embodiment of a hydrogen supply system using an accommodation body and a transportation method according to the present disclosure will be described in detail with reference to the accompanying drawing. In the following description, the same reference numeral will be given of the same or equivalent portion, and redundant description will be omitted.

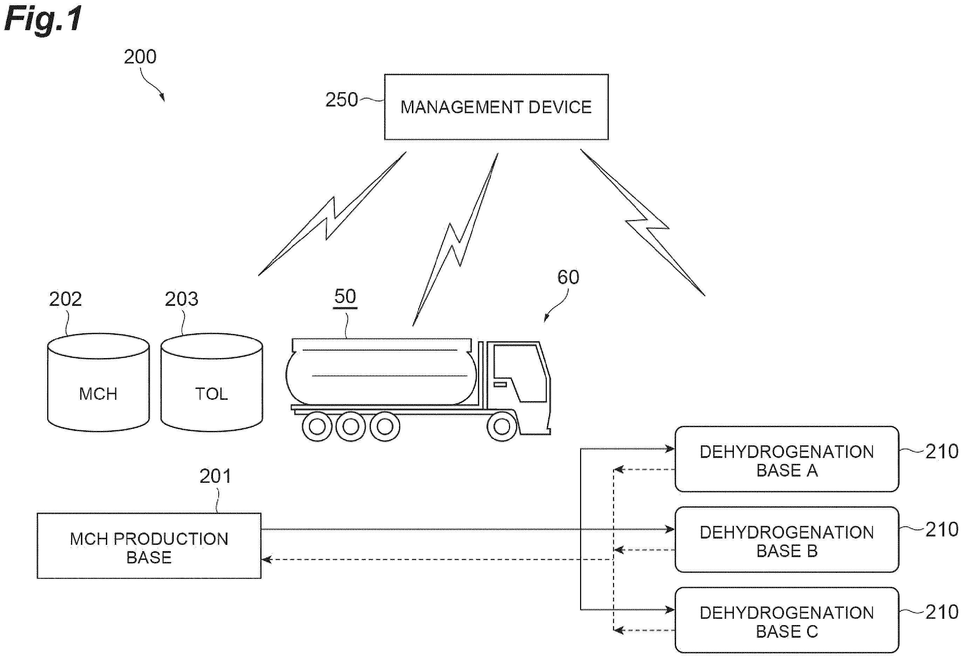

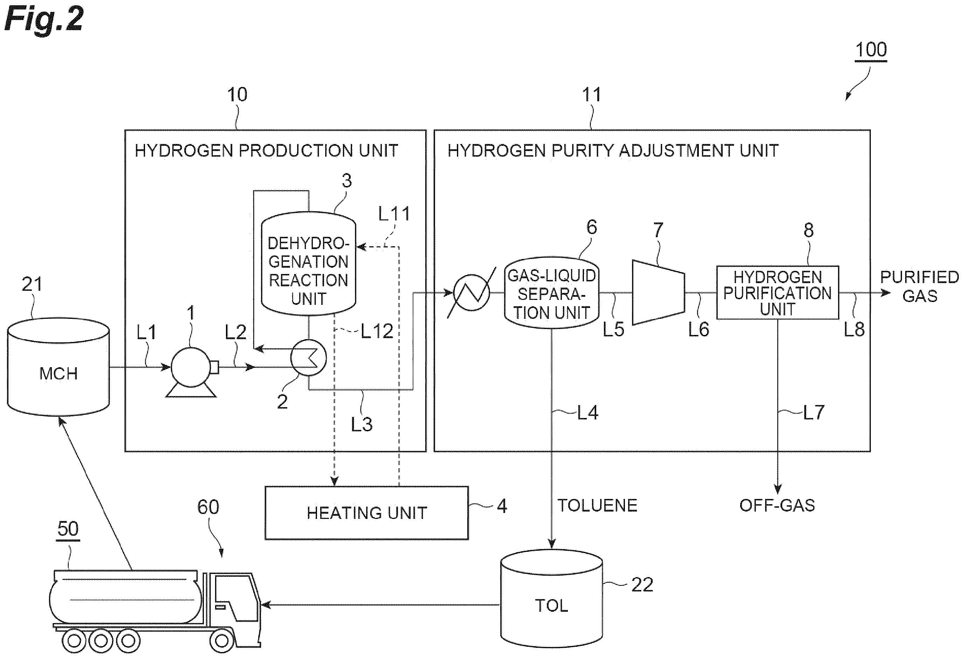

FIG. 1 is a schematic view of a transportation system 200 using an accommodation body 50 according to the embodiment of the present disclosure. The transportation system 200 is a system in which a moving body 60 including the accommodation body 50 transports and distributes a raw material to a plurality of dehydrogenation bases 210 (here, dehydrogenation bases A to C are exemplified). First, description will be given of how to produce hydrogen at each of the dehydrogenation bases 210 with reference to FIG. 2. FIG. 2 is a block diagram illustrating a configuration of a hydrogen supply system 100 provided in each of the dehydrogenation bases 210.

The hydrogen supply system 100 uses an organic compound (a liquid at an ordinary temperature) as a raw material. Note that, in a hydrogen purification process, a dehydrogenation product (organic compound (liquid at an ordinary temperature)) obtained by dehydrogenating the organic compound (a liquid at an ordinary temperature) that is a raw material is removed. Examples of the organic compound that is a raw material include an organic hydride. An appropriate example of the organic hydride is a hydride obtained by causing hydrogen that is massively produced at an oil refinery and aromatic hydrocarbon to react with each other. In addition, the organic hydride is not limited to aromatic hydrogenated compound, and includes 2-propanol system (hydrogen and acetone are produced). The organic hydride can be transported to the hydrogen supply system 100 by a moving body 60 such as a tank lorry as a liquid fuel in a similar manner as in gasoline or the like. In this embodiment, as the organic hydride, methyl cyclohexane (hereinafter, referred to as "MCH") is used. In addition, as the organic hydride, a hydride of aromatic hydrocarbon such as cyclohexane, dimethyl cyclohexane, ethyl cyclohexane, decalin, methyl decalin, dimethyl decalin, and ethyl decalin is applicable. Note that, an aromatic compound is an appropriate example in which the amount of hydrogen contained is particularly large. The hydrogen supply system 100 can supply hydrogen to a fuel cell vehicle (FCV) or a hydrogen engine vehicle. Note that, application can also be made to a case of producing hydrogen from a natural gas containing methane as a main component, LPG containing propane as a main component, or liquid hydrocarbon raw materials such as gasoline, naphtha, kerosene, and light oil.

As illustrated in FIG. 2, the hydrogen supply system 100 according to this embodiment includes a liquid transfer pump 1, a heat exchange unit 2, a dehydrogenation reaction unit 3, a heating unit 4, a gas-liquid separation unit 6, a compression unit 7, and a hydrogen purification unit 8. Among these, the liquid transfer pump 1, the heat exchange unit 2, and the dehydrogenation reaction unit 3 pertain to a hydrogen production unit 10 that produces a hydrogen-containing gas. In addition, the gas-liquid separation unit 6, the compression unit 7, and the hydrogen purification unit 8 pertain to a hydrogen purity adjustment unit 11 that raises the purity of hydrogen. In addition, the hydrogen supply system 100 includes lines L1 to L12. Note that, in this embodiment, description will be given of a case where MCH is employed as a raw material, and a dehydrogenation product removed in a hydrogen purification process is toluene as an example. Note that, actually, not only toluene but also unreacted MCH, a small amount of by-products, and impurities exist, but in this embodiment, these are considered to be mixed with toluene and show the same behavior as in the toluene. Accordingly, in the following description, it is assumed that "toluene" is intended to include unreacted MCH and by-products.

The lines L1 to L12 are flow paths through which MCH, toluene, a hydrogen-containing gas, an off-gas, high-purity hydrogen, or a heating medium passes. The line L1 is a line for pumping MCH from an MCH tank 21 by the liquid transfer pump 1, and connects the liquid transfer pump 1 and the MCH tank 21 to each other. The line L2 connects the liquid transfer pump 1 and the dehydrogenation reaction unit 3 to each other. The line L3 connects the dehydrogenation reaction unit 3 and the gas-liquid separation unit 6 to each other. The line L4 connects the gas-liquid separation unit 6 and a toluene tank 22 to each other. The line L5 connects the gas-liquid separation unit 6 and the compression unit 7 to each other. The line L6 connects the compression unit 7 and the hydrogen purification unit 8 to each other. The line L7 connects the hydrogen purification unit 8 and a supply destination of the off-gas to each other. The line L8 connects the hydrogen purification unit 8 and a purified gas supply device (not illustrated) to each other. The lines L11 and L12 connect the heating unit 4 and the dehydrogenation reaction unit 3 to each other. The lines L11 and L12 circulate a heat medium.

The liquid transfer pump 1 supplies MCH that becomes a raw material to the dehydrogenation reaction unit 3. Note that, MCH transported from the outside by the moving body 60 such as a tank lorry is stored in the MCH tank 21. MCH stored in the MCH tank 21 is supplied to the dehydrogenation reaction unit 3 through the lines L1 and L2 by the liquid transfer pump 1.

The heat exchange unit 2 performs heat exchange between MCH that circulates through the line L2 and the hydrogen-containing gas that circulates through the line L3. A temperature of the hydrogen-containing gas emitted from the dehydrogenation reaction unit 3 is higher than that of the MCH. Accordingly, in the heat exchange unit 2, the MCH is heated by heat of the hydrogen-containing gas. According to this, the MCH is supplied to the dehydrogenation reaction unit 3 in a state in which a temperature is raised. Note that, the MCH is mixed with an off-gas supplied from the hydrogen purification unit 8 through the line L7, and is supplied to the dehydrogenation reaction unit 3.

The dehydrogenation reaction unit 3 is a device that subjects the MCH to a dehydrogenation reaction to obtain hydrogen. That is, the dehydrogenation reaction unit 3 is s device that extracts hydrogen from the MCH by the dehydrogenation reaction using a dehydrogenation catalyst. The dehydrogenation catalyst is not particularly limited, and is selected, for example, from a platinum catalyst, a palladium catalyst, and a nickel catalyst. These catalysts may be carried on a carrier such as alumina, silica, and titania. A reaction of the organic hydride is a reversible reaction, and a direction of the reaction varies in response to a reaction condition (a temperature or a pressure) (restricted by chemical equilibrium). On the other hand, the dehydrogenation reaction is always an endothermic reaction in which the number of molecules increases. Accordingly, conditions of a high temperature and a low pressure are advantageous. Since the dehydrogenation reaction is the endothermic reaction, dehydrogenation reaction unit 3 is supplied with heat from the heating unit 4 through a heat medium that circulates through the lines L11 and L 12. The dehydrogenation reaction unit 3 includes a mechanism that capable of exchanging heat between the MCH that flows through the dehydrogenation catalyst and the heat medium from the heating unit 4. The hydrogen-containing gas extracted in the dehydrogenation reaction unit 3 is supplied to the gas-liquid separation unit 6 through the line L3. The hydrogen-containing gas in the line L3 is supplied to the gas-liquid separation unit 6 in a state of containing liquid toluene as a mixture.

The heating unit 4 heats the heat medium and supplies the heat medium to the dehydrogenation reaction unit 3 through the line L 11. The heat medium after heating is returned to the heating unit 4 through the line L12. The heat medium is not particularly limited, but an oil or the like may be employed. Note that, the heating unit 4 may employ an arbitrary medium as long as the dehydrogenation reaction unit 3 can be heated. For example, the heating unit 4 may directly heat the dehydrogenation reaction unit 3 or may heat the MCH that is supplied to the dehydrogenation reaction unit 3 by heating, for example, the line L2. In addition, the heating unit 4 may heat both the dehydrogenation reaction unit 3 and the MCH that is supplied to the dehydrogenation reaction unit 3. For example, a burner or an engine may be employed as the heating unit 4.

The gas-liquid separation unit 6 is a tank that separates toluene from the hydrogen-containing gas. The gas-liquid separation unit 6 stores the hydrogen-containing gas that contains toluene as a mixture to gas-liquid separate hydrogen that is a gas and toluene that is a liquid from each other. In addition, the hydrogen-containing gas that is supplied to the gas-liquid separation unit 6 is cooled down by the heat exchange unit 2. Note that, the gas-liquid separation unit 6 may be cooled down by a cooling medium from a cold heat source. In this case, the gas-liquid separation unit 6 includes a mechanism capable of exchanging heat between the hydrogen-containing gas in the gas-liquid separation unit 6 and the cooling medium from the cold heat source. Toluene separated by the gas-liquid separation unit 6 is supplied to a toluene tank 22 through the line L4. In addition, toluene in the toluene tank 22 is recovered to the moving body 60 such as a tank lorry. The hydrogen-containing gas separated by the gas-liquid separation unit 6 is supplied to the hydrogen purification unit 8 through the lines L5 and L6 by a pressure of the compression unit 7. Note that, when the hydrogen-containing gas is cooled down, a part (toluene) of the gas is liquified, and can be separated from a gas (hydrogen) that is not liquified by the gas-liquid separation unit 6. When a gas is maintained at a low temperature, separation efficiency is raised, and when a pressure is raised, liquefaction of toluene further proceeds.

The hydrogen purification unit 8 removes a dehydrogenation product (toluene in this embodiment) from the hydrogen-containing gas that is obtained by the dehydrogenation reaction unit 3 and is gas-liquid separated by the gas-liquid separation unit 6. According to this, the hydrogen purification unit 8 purifies the hydrogen-containing gas to obtain high-purity hydrogen (purified gas). The purified gas that is obtained is supplied to the line L8. Note that, the off-gas that is generated in the hydrogen purification unit 8 is supplied to the dehydrogenation reaction unit 3 through the line L7.

The hydrogen purification unit 8 is different depending on a hydrogen purification method that is employed. Specifically, in a case of using membrane separation as the hydrogen purification method, the hydrogen purification unit 8 is a hydrogen separation device including a hydrogen separation membrane. In addition, in a case of using a pressure swing adsorption (PSA) method or a temperature swing adsorption (TSA) method as the hydrogen purification method, the hydrogen purification unit 8 is an adsorption removal device including a plurality of adsorption towers which store an adsorbent that adsorb impurities.

Note that, here, a hydrogen station for FVC has been exemplified as the hydrogen supply system, but the hydrogen supply system may be, for example, a hydrogen supply system for distributed power supplies such as a commercial power supply and a power supply for emergency.

Returning to FIG. 1, a configuration of the transportation system 200 will be described in detail. The transportation system 200 includes an MCH production base where MCH 201 that is a raw material is produced, the dehydrogenation bases 210 including the above-described hydrogen supply system 100, the moving body 60 that transports a raw material and a dehydrogenation product by the accommodation body 50, and a management device 250 that manages the entirety of the system. Note that, in FIG. 1, one moving body 60 is illustrated, but transportation is performed by a plurality of the moving bodies 60.

The MCH production base 201 is a base including a production system that produces MCH that is a raw material. The MCH production base 201 can produce MCH by performing a predetermined treatment for toluene that is a dehydrogenation product recovered from each of the dehydrogenation bases 210 to add hydrogen thereto. The MCH production base 201 includes an MCH tank 202, and a toluene tank 203. Accordingly, in the MCH production base 201, produced MCH is stored in the MCH tank 202. Then, the MCH in the MCH tank 202 is accommodated in the accommodation body 50 of the moving body 60 at necessary timing. The toluene tank 203 stores toluene recovered from each of the dehydrogenation bases 210. In the MCH production base 201, a predetermined amount of toluene is taken out from the toluene tank 203 and is used as a raw material when producing MCH.

The management device 250 is a device that manages the entirety of the transportation system 200. The management device 250 can perform information communication with the MCH production base 201, the dehydrogenation base 210, and the moving body 60 through a radio communication unit. The management device 250 receives the amount of MCH stored in the MCH tank 21 and the amount of toluene stored in the toluene tank 22 in the dehydrogenation base 210. The management device 250 plans to produce how much amount of MCH on the basis of the amount of MCH and the amount of toluene in the dehydrogenation base 210. In addition, the management device 250 plans which routine is used for distribution of MCH and recovery of toluene. The management device 250 transmits the information to the MCH production base 201 and the moving body 60.

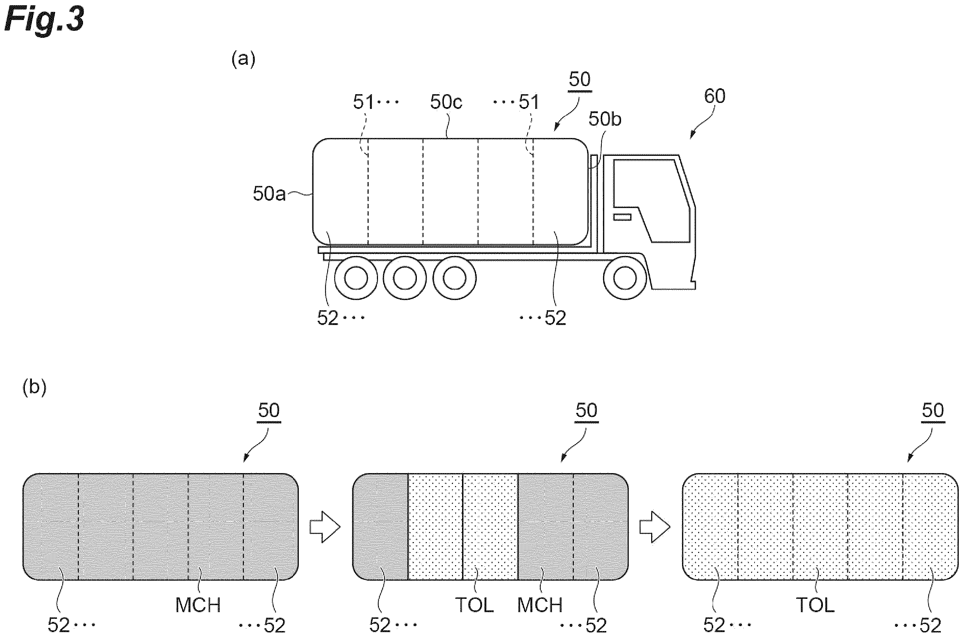

Next, the accommodation body 50 according to this embodiment will be described in detail with reference to FIG. 3. FIG. 3(a) is a side view illustrating the accommodation body 50 mounted on the moving body 60. FIG. 3(b) is a conceptual diagram illustrating a usage example of the accommodation body 50. The accommodation body 50 can load MCH and the toluene together in an inner space. For example, "loading together" represents a state in which MCH and toluene are accommodated together in one accommodation body 50 as illustrated at the center of FIG. 3(b). As illustrated in FIG. 3(a), the accommodation body 50 according to this embodiment is a tank of a tank lorry, and has an approximately cylindrical shape in which a longitudinal direction is a front and rear direction. The inner space is a space surrounded by a rear wall 50a, a front wall 50b, and a peripheral wall 50c of the accommodation body 50. The accommodation body 50 is disposed is disposed at a loading portion on a rear side of the moving body 60.

As illustrated in FIG. 3(a), the inner space of the accommodation body 50 is partitioned into a plurality of accommodation chambers 52 by a partition member 51. The partition member 51 is fixed to an inner surface of the peripheral wall 50c over the entirety of periphery at a predetermined position in the longitudinal direction of the accommodation body 50. According to this, the partition member 51 can partition the inner space of the accommodation body 50 in the front and rear direction. A plurality of the partition members 51 are arranged to face each other in the front and rear direction in a state of being separated from each other. According to this, the plurality of accommodation chambers 52 are formed between the rear wall 50a of the accommodation body 50 and the partition member 51, between a pair of the partition members 51, and between the front wall 50b of the accommodation body 50 and the partition member 51. One accommodation chamber 52 is watertight with respect to another accommodation chamber 52. Accordingly, a liquid accommodated in the one accommodation chamber 52 is not leaked to the other accommodation chamber 52.

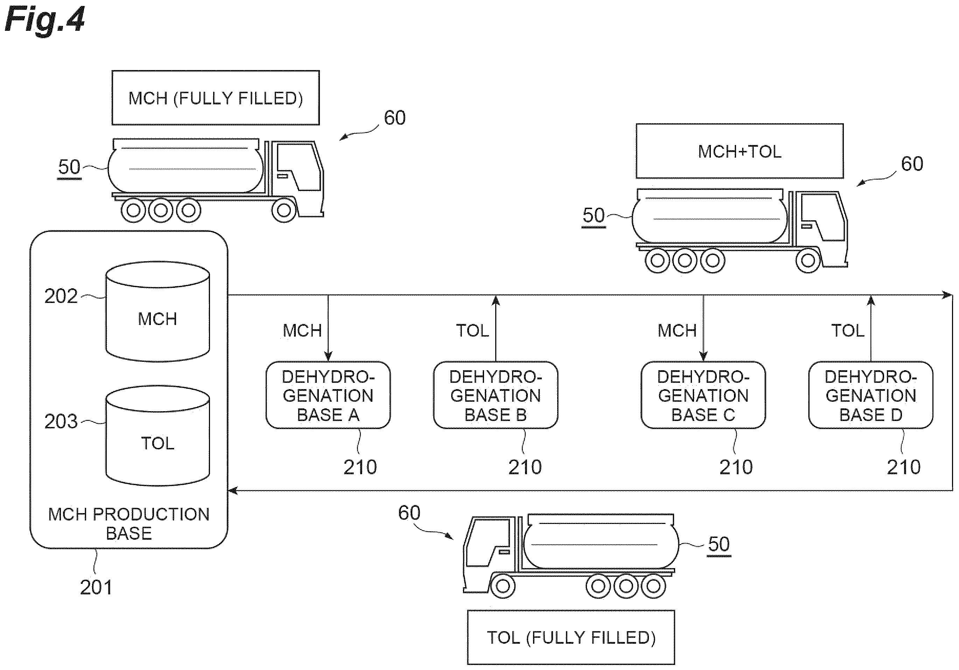

Next, an example of the transportation method using the accommodation body 50 will be described with reference to FIG. 3(b) and FIG. 4. FIG. 4 is a conceptual diagram illustrating an example of the transportation method. The transportation method includes an MCH accommodation process, an MCH distribution process, a toluene accommodation process, and a toluene returning process.

The MCH accommodation process is a process of accommodating MCH into the accommodation body 50 at the MCH production base 201. At this time, the accommodation body 50 enters a state in which the tank is fully filled with MCH, and enters a state in which MCH is accommodated in all of the accommodation chamber 52 (refer to a left drawing in FIG. 3(b)). The moving body 60 loads the accommodation body 50 entering the above-described state, and departs the MCH production base 201.

The MCH distribution process is a process of distributing MCH to a predetermined dehydrogenation base. The moving body 60 distributes a part or all of MCH accommodated in the accommodation body 50 to the dehydrogenation base 210 that is a target. The toluene accommodation process is a process of accommodating toluene in a space formed by distributing MCH. The moving body 60 recovers toluene from the dehydrogenation base 210 that is the target.

In the example illustrated in FIG. 4, the moving body 60 distributes MCH a "dehydrogenation base A" among a plurality of the dehydrogenation bases 210. Next, the moving body 60 recovers toluene from a "dehydrogenation base B". At this time, since a part of the accommodation chambers 52 becomes empty after distributing MCH at the "dehydrogenation base A", toluene is accommodated in the accommodation chamber 52 at the "dehydrogenation base B" (refer to the central drawing in FIG. 3(b)). Note that, a very small amount of MCH remains in the accommodation chamber 52 after distributing MCH. However, it is not necessary to clean the accommodation chamber 52, and toluene may be accommodated in the accommodation chamber 52 in a state in which MCH remains.

Similarly, the moving body 60 distributes MCH to a "dehydrogenation base C" among the plurality of dehydrogenation bases 210. Next, the moving body 60 recovers toluene from a "dehydrogenation base D". According to this, toluene is accommodated in all of the accommodation chambers 52, and the accommodation body 50 enters a state in which the tank is fully filled with toluene (refer to a right drawing in FIG. 3(b)). Next, the moving body 60 executes the toluene returning process.

The toluene returning process is a process of returning toluene recovered from each of the dehydrogenation bases 210 to the toluene tank 203 of the MCH production base 201. According to this, the accommodation body 50 becomes empty, and thus can repeat the process from the MCH accommodation process again. Note that, a very small amount of toluene remains in the accommodation chamber 52 after returning toluene. However, it is not necessary to clean the accommodation chamber 52, and MCH may be accommodated in the accommodation chamber 52 in a state in which toluene remains.

Note that, the toluene returning process may not be executed at timing at which the accommodation body 50 enters a state in which the tank is fully filled with toluene. For example, the moving body 60 may return to the MCH production base 201 in a state in which the tank is not fully filled with toluene, or a state in which non-distributed MCH remains, and may return toluene. In addition, a pattern of the above-described MCH distribution and toluene recovery may be appropriately changed. In addition, the moving body 60 may recovery toluene as is from the dehydrogenation base 210 to which MCH is distributed.

Next, an operation and an effect of the accommodation body 50 and the transportation method according to this embodiment will be described.

First, an accommodation body and a transportation method according to a comparative example will be described. In the accommodation body according to the comparative example, MCH and toluene cannot be load together. In addition, in the transportation method using the accommodation body, in a case of supplying a raw material from one MCH production base 201 to a plurality of dehydrogenation bases 210, a moving body dedicated for MCH transportation is prepared. The moving body dedicated for MCH transportation goes around the plurality of dehydrogenation bases 210 and distributes MCH. In addition, when the accommodation body becomes empty, the moving body returns to the MCH production base 201, and goes around after accommodating the raw material in the accommodation body again. On the other hand, a moving body dedicated for toluene recovery is prepared. The moving body dedicated for toluene recovery departs the MCH production base 201 in a state in which the accommodation body is empty. Then, the moving body goes around the plurality of dehydrogenation bases 210 to recover toluene, and returns toluene to the MCH production base 201. However, in the transportation method according to the comparative example, there is a problem that a transportation frequency of the moving body such as a lorry becomes high, and as a result, the transportation cost increases, and finally, the cost of hydrogen increases.

In contrast, the accommodation body 50 according to this embodiment is an accommodation body 50 that accommodates a raw material including a hydride from which a hydrogen-containing gas is capable of being obtained by subjecting the raw material to a dehydrogenation reaction. MCH (raw material) and toluene (dehydrogenation product) produced in combination with the hydrogen-containing gas by the dehydrogenation reaction are capable being loaded together in the internal space.

Here, typically, in a case where a moving body transports a predetermined raw material in a state of being accommodated in the accommodation body, typically, the raw material and another material are not accommodated in one accommodation body in combination in order to avoid contamination. That is, as in the above-described comparative example, with respect to the raw material, an accommodation body dedicated from the raw material is prepared, and with respect to the other material, an accommodation body dedicated for the other material is prepared for transportation.

However, the present inventors have made a thorough investigation, and as a result, they obtained the following finding. Specifically, the present inventors found that in a case of transporting a raw material such as MCH including a hydride from which a hydrogen-containing gas can be obtained by subjecting the raw material to a dehydrogenation reaction, even when accommodating a dehydrogenation product such as toluene in the accommodation body 50 that accommodates MCH in combination, a problem does not occur. Toluene is a material obtained by excluding hydrogen from MCH. Accordingly, even when a very small amount of toluene is mixed in MCH, since toluene is generated in a reaction by the dehydrogenation reaction unit, there is no adverse effect such as deterioration of the dehydrogenation catalyst due to the mixing-in. In addition, even when a very small amount of MCH is mixed in toluene, since toluene finally becomes MCH by a process of adding hydrogen, there is no adverse effect such as a decrease in processing efficiency due to the mixing-in.

Accordingly, in the accommodation body 50 according to this embodiment, MCH and toluene can be loaded together in the inner space. For example, in a case where the moving body 60 has supplied a part of MCH inside the accommodation body 50 at an arbitrary dehydrogenation base 210, an empty space occurs in the inner space of the accommodation body 50 by a space corresponding to the supply. The accommodation body 50 can accommodate toluene stored at the dehydrogenation base 210 in the empty inner space. In this case, with respect to a plurality of the dehydrogenation bases 210, the moving body 60 can also recover toluene while distributing MCH. Accordingly, it is not necessary to additionally prepare a moving body 60 dedicated for toluene recovery in addition to the moving body 60 dedicated for MCH distribution. According to this, it is possible to reduce a transportation frequency of the moving body 60 that transports MCH and toluene.

The inner space may be partitioned into the plurality of accommodation chambers 52 by the partition member 51. According to this, it is possible to easily form the plurality of accommodation chambers 52 in the inner space of the accommodation body 50.

The transportation method according to this embodiment is a transportation method of transporting MCH by using the above-described accommodation body 50. The transportation method includes a process of accommodating MCH in the accommodation body 50 at the MCH production base 201 where MCH is produced, a process of distributing MCH inside the accommodation body 50 at the plurality of dehydrogenation bases 210 where the dehydrogenation reaction is performed by using MCH, and a process of accommodating toluene in a space formed due to distribution of MCH at the plurality of dehydrogenation bases 210.

According to the transportation method, it is possible to obtain the same operation and effect as in the above-described accommodation body 50.

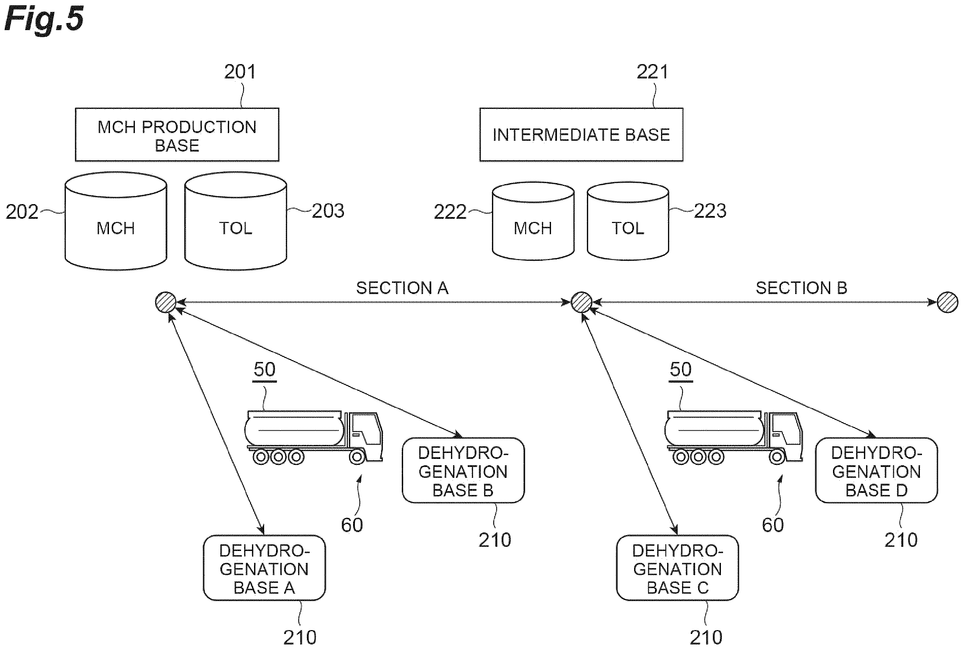

The present disclosure is not limited to the above-described embodiment. For example, a transportation method as illustrated in FIG. 5 may be employed. FIG. 5 is a conceptual diagram illustrating the transportation method according to a modification example. As illustrated in FIG. 5, in a case where the MCH production base 201 and the dehydrogenation base 210 (dehydrogenation bases C and D) are separated from each other, and thus long-distance transportation (for example, 600 km) is required, an intermediate base 221 (for example, a site distant by 300 km) including an MCH tank 222 and a toluene tank 223 may be provided. For example, in a case where the moving body 60 performs distribution of MCH and recovery of toluene with respect to dehydrogenation bases 210 (dehydrogenation bases A and B) existing in a section A capable of being handled by short-distance transportation, accommodation of MCH and returning of toluene are performed at the MCH production base 201. On the other hand, in a case where the moving body 60 performs distribution of MCH and recovery of toluene with respect to dehydrogenation bases 210 (dehydrogenation bases C and D) existing in a section B for which handling by long-distance transportation is required, accommodation of MCH and returning of toluene are performed at the intermediate base 221.

As the above-described moving body, a tank lorry is exemplified as an example where land transportation is performed. However, the moving body may be a moving body that perform another land transportation such as a train. In addition, the moving body may be not only a moving body that performs land transportation but also a ship that can perform river and sea transportation. Even in a case of performing the river and sea transportation, the intermediate base 221 as illustrated in FIG. 5 may be provided.

Note that, the shape of the accommodation body 50 is not limited to the above-described embodiment. In addition, an aspect in which the inner space is divided by the partition member in which manner can be appropriately changed.

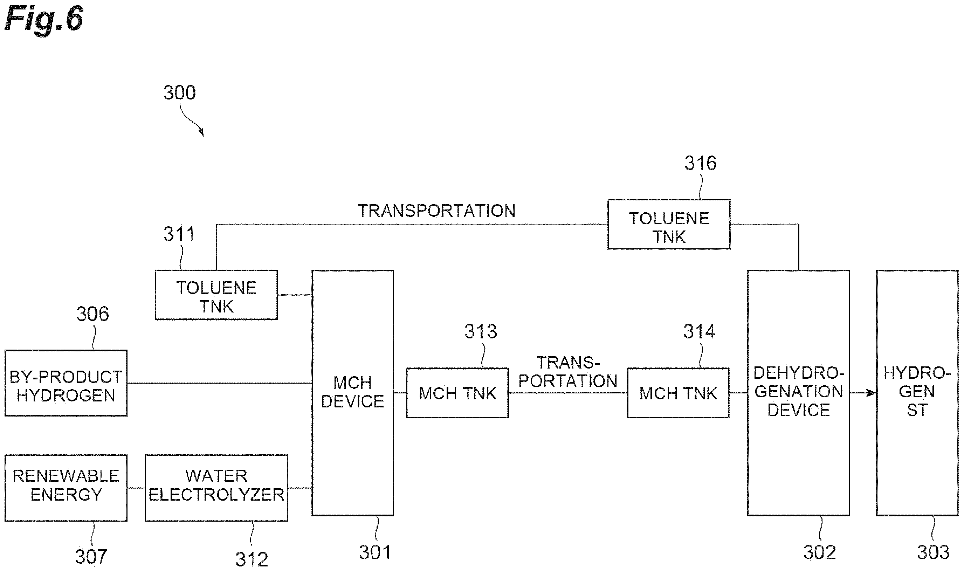

A flow of energy or a raw material in a transportation system 300 will be described with reference to FIG. 6. As illustrated in FIG. 6, the transportation system 300 includes an MCH device 301 that produces MCH, a dehydrogenation device 302 that produces hydrogen by a dehydrogenation reaction, and a hydrogen station 303 that supplies hydrogen. The MCH device 301 supplies by-product hydrogen from a by-product hydrogen supply unit 306 such as a factory, or hydrogen produced by a water electrolyzer 312 with renewable energy from a renewable energy supply unit 307. In addition, the MCH device 301 supplies toluene recovered from each dehydrogenation device 302. According to this, the MCH device 301 produces MCH. The MCH device 301 stores toluene in a toluene tank 311. The MCH device 301 stores MCH in an MCH tank 313. MCH inside the MCH tank 313 can be stored in an MCH tank 314 on the dehydrogenation device 302 side. In addition, toluene produced by the dehydrogenation device 302 can be stored in a toluene tank 316. The hydrogen station 303 supplies hydrogen from the dehydrogenation device 302.

### Reference Signs List

50: accommodation body, 51: partition member, 52: accommodation chamber, 60: moving body, 201: MCH production base (raw material production base), 210: dehydrogenation base.

## Claims

1. An accommodation body that accommodates a raw material including a hydride from which a hydrogen-containing gas is capable of being obtained by subjecting the raw material to a dehydrogenation reaction,
wherein the raw material and a dehydrogenation product produced in combination with the hydrogen-containing gas by the dehydrogenation reaction are capable being loaded together in an internal space.

2. The accommodation body according to claim 1,
wherein the inner space is partitioned into a plurality of accommodation chambers by a partition member.

3. A transportation method of transporting a raw material by using the accommodation body according to claim 1 or 2, comprising:
a process of accommodating the raw material in the accommodation body at a raw material production base where the raw material is produced;
a process of distributing the raw material inside the accommodation body at dehydrogenation bases where the dehydrogenation reaction is performed by using the raw material; and
a process of accommodating the dehydrogenation product in a space formed due to distribution of the raw material at the dehydrogenation bases.
